(19) **Europäisches Patentamt**
**European Patent Office**
**Office européen des brevets**

(11) **EP 4 112 337 B1**

(12) **EUROPÄISCHE PATENTSCHRIFT**

(45) Veröffentlichungstag und Bekanntmachung des Hinweises auf die Patenterteilung:
**14.06.2023 Patentblatt 2023/24**

(21) Anmeldenummer: **21181978.4**

(22) Anmeldetag: **28.06.2021**

(51) Internationale Patentklassifikation (IPC):
***B60D 1/24*** *(2006.01)*

(52) Gemeinsame Patentklassifikation (CPC):
**B60D 1/242;** B60T 13/08; F16D 61/00

(54) **ANTRIEBS- UND BREMSSYSTEM FÜR FAHRZEUGANHÄNGER MIT ELEKTRISCHER ANTRIEBS- UND BREMSEINRICHTUNG**

DRIVE AND BRAKING SYSTEM FOR VEHICLE TRAILER WITH ELECTRIC DRIVE AND BRAKING DEVICE

SYSTÈME D'ENTRAÎNEMENT ET DE FREINAGE POUR REMORQUES POURVU DE DISPOSITIF ÉLECTRIQUE D'ENTRAÎNEMENT ET DE FREINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**04.01.2023 Patentblatt 2023/01**

(73) Patentinhaber: **Knott GmbH**
**D-83125 Eggstätt (DE)**

(72) Erfinder: **STRASSER, Josef**
**83257 Gstadt am Chiemsee (DE)**

(74) Vertreter: **Flach Bauer & Partner**
**Patentanwälte mbB**
**Adlzreiterstraße 11**
**83022 Rosenheim (DE)**

(56) Entgegenhaltungen:
EP-A1- 3 515 764    US-A1- 2012 261 900
US-A1- 2017 144 497    US-A1- 2020 377 094

EP 4 112 337 B1

**Beschreibung**

Die Erfindung betrifft ein Antriebs- und Bremssystem gemäß dem Oberbegriff des Anspruchs 1. Weiterhin betrifft die Erfindung einen Fahrzeuganhänger mit einem derartigen Antriebs- und Bremssystem.

Aus der US 2020/0377094 A1 ist ein Antriebs- und Bremssystem für Fahrzeuganhänger gemäß dem Oberbegriff des Anspruchs 1 mit einer Auflaufbremseinrichtung zur Betätigung einer Betriebsbremse des Fahrzeuganhängers und mit einer elektrischen Antriebs- und Bremseinrichtung bekannt, die zum Antreiben und rekuperativen Bremsen des Fahrzeuganhängers ausgebildet ist und einen Motor/Generator und eine Steuerung für den Motor/Generator aufweist. Die Ansteuerung des Motors/Generators erfolgt dort über eine Wegmesseinrichtung, die an der Auflaufeinrichtung angeordnet ist und mittels eines Sensors den Verschiebeweg der Zugstange relativ zur Zugstangenführung erfasst, wobei die Antriebs- und Rekuperationsleistung in Abhängigkeit des Verschiebewegs geregelt wird.

Die US 2017/0144497 A1 beschreibt ein elektrisches Antriebs- und Bremssystem mit einer Wege- und Kraftmesseinrichtung, die im Bereich einer Zugstange angeordnet ist und ein von der auf den Fahrzeuganhänger einwirkenden Beschleunigungskraft abhängiges Messsignal zur Betätigung der Bremsen ausgibt.

Aus der US 2012/0261900 A1 ist ein Bremssystem mit einer Messvorrichtung bekannt, die an der Anhängerkupplung des Zugfahrzeugs angeordnet ist und mittels Optokopplern den Einschubweg einer beweglichen Platte relativ zu einem Gehäuse misst, wenn das Zugfahrzeug gebremst wird.

Ausgehend von diesem Stand der Technik liegt der Erfindung die Aufgabe zugrunde, ein Antriebs- und Bremssystem zu schaffen, das auf möglichst einfache und zuverlässige Weise ein an die jeweilige Fahrsituation optimal angepasstes Antreiben und rekuperatives Bremsen des Fahrzeuganhängers mittels mindestens einem am Fahrzeuganhänger angeordneten Motor/Generator ermöglicht. Weiterhin soll ein Fahrzeuganhänger mit einem derartigen Antriebs- und Bremssystem geschaffen werden.

Diese Aufgabe wird erfindungsgemäß durch ein Antriebs-und Bremssystem gemäß Anspruch 1 sowie einen Fahrzeuganhänger gemäß Anspruch 11 gelöst. Vorteilhafte Ausführungsformen der Erfindung sind in den weiteren Ansprüchen beschrieben.

Bei dem erfindungsgemäßen Antriebs- und Bremssystem weist die elektrische Antriebs- und Bremseinrichtung eine Positionserfassungseinrichtung zur direkten oder indirekten Erfassung einer maximalen Ausziehposition der Zugstange relativ zur Zugstangenführung auf, wobei die Positionserfassungseinrichtung als Schalter ausgebildet ist, der einen ersten Schaltzustand einnimmt, wenn sich die Zugstange in ihrer maximalen Ausziehposition befindet, und einen zweiten Schaltzustand einnimmt, wenn sich die Zugstange von ihrer maximalen Ausziehposition entfernt, und wobei die Steuerung die Antriebs- und Rekuperationsleistung des Motors/Generators in Abhängigkeit des ersten und zweiten Schaltzustandes und von Drehbewegungs- und Beschleunigungssignalen regelt, die von Sensoren bereitgestellt werden, welche die Drehbewegung der Anhängerräder und Längsbeschleunigung des Fahrzeuganhängers erfassen.

Das erfindungsgemäße Antriebs- und Bremssystem des Fahrzeuganhängers kann nur einen einzigen Motor/Generator umfassen, der sowohl auf ein linksseitiges als auch auf ein rechtsseitiges Anhängerrad einwirkt (oder auch gemeinsam auf mehrere linksseitige und rechtsseitige Anhängerräder), oder auch mehrere Motoren/Generatoren, die getrennt auf das linksseitige Anhängerrad bzw. rechtsseitige Anhängerrad (bzw. auf mehrere linksseitige Anhängerräder bzw. rechtsseitige Anhängerräder) einwirken.

Beim erfindungsgemäßen Antriebs- und Bremssystem wird somit anstelle einer an der Auflaufeinrichtung angeordneten Wege- und/oder Kraftmesseinrichtung eine Positionserfassungseinrichtung verwendet, mit deren Hilfe festgestellt wird, ob sich die Zugstange in ihrer voll ausgezogenen Position befindet oder nicht. Diese Positionserfassungseinrichtung hat die Funktion eines Schalters, der einen ersten Schaltzustand einnimmt, wenn sich die Zugstange in ihrer maximalen Ausziehposition befindet, während er einen zweiten Schaltzustand einnimmt, wenn sich die Zugstange von ihrer maximalen Ausziehposition entfernt. Diese beiden sich unterscheidenden Schaltzustände werden verwendet, um in Kombination mit der von Drehbewegungssensoren erfassten Drehbewegungen der Fahrzeugräder und den von einem oder mehreren Beschleunigungssensoren gemessenen Längsbeschleunigungen des Fahrzeuganhängers die Antriebsleistung bzw. Bremsleistung des Motors/Generators zu regeln.

Das Antreiben des Fahrzeuganhängers mittels des Motors/Generators kann damit auf sehr einfache und zuverlässige Weise durchgeführt werden. Hierbei helfen zwei grundlegende Eigenschaften einer Auflaufbremsanlage :

a) zwischen der maximalen Ausziehposition, welche die Zugstange bei einer Beschleunigung des Gespanns oder während einer Fahrt mit konstanter Geschwindigkeit in der Ebene einnimmt (wobei ein Anschlagelement der Zugstange üblicherweise an einem Anschlag der Zugstangenführung anliegt), und einem effektiven Ansprechen der Auflaufbremsanlage existiert immer ein gewisser Leerweg (beispielsweise 20 mm); und
b) der bei einer Auflaufbremsanlage üblicherweise vorhandene hydraulische Auflaufdämpfer dämpft bzw. unterdrückt weitgehend alle Längsschwingungen.

Aufgrund dieser Eigenschaften kann vermieden werden, dass der Motor/Generator sofort in den Rekuperations-Bremsmodus geschaltet und/oder die Auflaufbremseinrichtung aktiviert wird, wenn die Zugstange nur geringfügig mit Druck beaufschlagt wird. Da weiterhin die Zug- bzw. Druckkraft des Auflaufdämpfers überwunden werden muss, werden auch unerwünschte Ruckbewegungen des Fahrzeuganhängers vermieden.

Die Positionserfassungseinrichtung kann beispielsweise ein mechanischer Schalter, Reed-Kontakt oder induktiver Näherungsschalter sein.

Vorteilhafterweise ist die Positionserfassungseinrichtung im Bereich der Zugstangenführung angeordnet, wobei die Positionserfassungseinrichtung die Position der Zugstange relativ zur Zugstangenführung erfasst. Die Position der Zugstange wird in diesem Fall direkt detektiert. Die Positionserfassungseinrichtung kann jedoch auch an anderer Stelle angeordnet sein, beispielsweise im Schwenkbereich eines mit der Zugstange zusammenwirkenden Übersetzungshebels, wobei die Positionserfassungseinrichtung die Ausziehposition der Zugstange dann indirekt über die Position des Übersetzungshebels erfassen kann.

Weiterhin kann die Positionserfassungseinrichtung auch an anderen Stellen einer Bremskraftübertragungseinrichtung, beispielsweise an Bremskraftübertragungselementen wie einem Bremsgestänge, einer Seilzug-Ausgleichswaage oder an zu den Bremsen führenden Seilzügen, angeordnet sein und die vorbestimmte Ausziehposition der Zugstange indirekt über die Position dieser Bremskraftübertragungselemente erfassen.

Dies ist möglich, da der Übersetzungshebel bei einer mechanischen Bremskraftübertragungseinrichtung aufgrund von Rückstellkräften des Bremssystems immer in Kontakt mit der Zugstange gehalten wird, wobei sich die Position des Übersetzungshebels und der Bremskraftübertragungselemente bei einer Änderung der Ausziehposition der Zugstange ebenfalls entsprechend ändert.

Eine Anordnung der Positionserfassungseinrichtung am Übersetzungshebel oder den Bremskraftübertragungselementen bietet den Vorteil, dass der Motor/Generator niemals in den Antriebsmodus geschaltet werden kann, wenn die Feststellbremse, die über einen auf den Übersetzungshebel einwirkenden Handbremshebel, eventuell mit Federspeicherunterstützung, betätigt wird, eingelegt ist.

Vorzugsweise erhöht die Steuerung die Antriebsleistung des Motors/Generators bei einer Beschleunigung des Fahrzeuganhängers so lange, bis sich die Zugstange von der maximalen Ausziehposition entfernt.

Vorzugsweise reduziert die Steuerung bei einer Beschleunigung oder konstanten Geschwindigkeit des Fahrzeuganhängers in Kombination mit einer von der maximalen Ausziehposition entfernten Position der Zugstange die Antriebsleistung des Motors/Generators auf einen vorbestimmten Sollwert.

Hierdurch kann der Motor/Generator beim Anfahren und Beschleunigen folgendermaßen angesteuert werden:
Sobald sich das Gespann in Bewegung setzt und die Zugstange voll ausgezogen ist, wird der Motor/Generator des Fahrzeuganhängers in den Antriebsmodus geschaltet, so dass der Motor/Generator das Zugfahrzeug entsprechend der von den Beschleunigungssensoren gemessenen Beschleunigung plus einem kleinen Zuschlag unterstützt. Dieser Zuschlag wird solange gesteigert, bis die Zugstange leicht in die Zugstangenführung eingeschoben wird. Die Positionserfassungseinrichtung erkennt das Entfernen der Zugstange aus ihrer maximalen Ausziehposition und teilt dies der Steuerung mit. Die Steuerung reduziert nun die Antriebsleistung des Motors/Generators auf einen Sollwert, der derart bemessen ist, dass die Zugstange wieder ihre maximale Ausziehposition einnimmt, d. h. voll ausgezogen ist. Dies stellt sicher, dass der Fahrzeuganhänger beim Beschleunigen des Gespanns und bei Fahrten, bei denen kein trägheitsbedingtes Auflaufen des Fahrzeuganhängers auf das Zugfahrzeug auftritt, immer ein gezogener Fahrzeuganhänger bleibt.

Das Verschieben der Zugstange aufgrund der Antriebsleistung des Motors/Generators kann zur Berechnung bzw. zumindest zu einer näherungsweisen Schätzung der Masse des Fahrzeuganhängers herangezogen werden, die einen zu berücksichtigenden Parameter für die aufzubringende Antriebsleistung des Motors/Generators darstellt. Wenn der Schalter beim Einschieben der Zugstange die Antriebsunterstützung des Motors/Generators abschaltet, bedeutet dies, dass der Motor/Generator eine Kraft aufgebracht haben muss, welche mindestens der vom Zugfahrzeug vorgegebenen Beschleunigung multipliziert mit der Masse des Anhängers, plus einer bekannten Ansprechkraft eines bei Auflaufbremseinrichtungen üblicherweise vorhandenen Auflaufdämpfers, plus einer Korrekturkraft für eine eventuell vorhandene Fahrbahnsteigung, entspricht. Dies kann durch die folgende Formel (1) ausgedrückt werden:

$$(1) \quad F = m \cdot a + F_D + F_S$$

wobei:

F: Vom Motor/Generator aufgebrachte Kraft;
m: Masse des Fahrzeuganhängers
a: Längsbeschleunigung des Gespanns
$F_D$: Ansprechkraft des Auflaufdämpfers
$F_S$: Korrekturkraft für Fahrbahnsteigung

Die Längsbeschleunigung a des Gespanns kann dabei von einem oder mehreren am Fahrzeuganhänger vorgesehenen Beschleunigungssensoren detektiert werden. Die Ansprechkraft des Auflaufdämpfers $F_D$, welche gemäß Vorschrift etwa 2-4 % des maximalen Gesamtgewichts des Fahrzeuganhängers entsprechen muss, ist ebenfalls bekannt. Die erforderliche Korrekturkraft für die Fahrbahnsteigung $F_S$ kann unter Zugrundelegung von Messergebnissen von am Fahrzeuganhänger angebrachten Beschleunigungs- und Drehbewegungssensoren ermittelt werden, wie nachfolgend noch näher beschrieben wird.

Weiterhin kann die vom Motor/Generator aufgebrachte Kraft auch über das hierfür erforderliche Drehmoment, das entweder über die Motorkennlinie und der Messung der Motorströme oder über eine direkte Drehmomentmessung ermittelt werden kann, und den Radius der Anhängerräder berechnet werden. Dies kann durch folgende Formel (2) ausgedrückt werden:

$$(2) \quad F = M \ / \ r$$

wobei:

F: vom Motor/Generator aufgebrachte Kraft;
M: vom Motor/Generator aufgebrachtes Drehmoment;
r: Radius der Anhängerräder.

Durch Gleichsetzen der Formeln (1) und (2) lässt sich nun näherungsweise die Masse m des Fahrzeuganhängers gemäß folgender Formel (3) ermitteln:

$$(3) \quad m = (M/r - F_D - F_S) \ / \ a$$

Durch eine derartige Bestimmung der Masse des Fahrzeuganhängers lässt sich die erforderliche Antriebs- und Rekuperationsleistung des Motors/Generators zumindest näherungsweise an die jeweiligen Gegebenheiten anpassen. Es ist dann möglich, die Antriebsleistung/Rekuperation des Motors/Generators nur noch unter Zugrundelegung der gemessenen Raddrehzahlen bzw. Beschleunigung des Fahrzeuganhängers zu regeln.

Vorzugsweise erfolgen die hierfür erforderlichen Messungen mehrmals bei niedrigen, besonders vorzugsweise bei immer gleichen, Geschwindigkeiten, um den Einfluss des Luftwiderstandes auszuschalten bzw. so gering wie möglich zu halten.

Werden diese Messungen bei verschiedenen Geschwindigkeiten durchgeführt, kann damit auch noch auf den ungefähren Luftwiderstand des Fahrzeuganhängers geschlossen werden, was die nachfolgenden Regelungsvorgänge betreffend Antrieb/Rekuperation verbessert.

Nachdem aus den ersten Beschleunigungen bei vorzugsweise immer gleicher Geschwindigkeit eine näherungsweise Bestimmung der Anhängermasse erfolgen kann und aus den Beschleunigungen bei höheren Geschwindigkeiten auch geschwindigkeitsabhängige Koeffizienten für den Luftwiderstand näherungsweise bestimmt werden können, kann aus diesen Informationen die notwendige Antriebsleistung des Fahrzeuganhängers näherungsweise bestimmt werden, welche bei einer aktuellen Geschwindigkeit zum Erreichen einer angestrebten und hinterlegten/vorgegebenen Zugkraft eingesteuert werden muss.

Vorzugsweise ist die Steuerung derart ausgebildet, dass sie die Fahrbahnsteigung aus der Differenz eines ersten Messwertes und eines zweiten Messwertes ermittelt, wobei der erste Messwert von dem am Chassis des Fahrzeuganhängers angeordneten Beschleunigungssensor geliefert wird, der die Steigung bzw. Neigung misst, während der zweite Messwert von die Drehbewegung eines Anhängerrades erfassenden Drehbewegungssensors geliefert wird. Hierdurch kann ermittelt werden, ob der Fahrzeuganhänger auf einer Ebene, Steigung oder einem Gefälle bewegt, beschleunigt oder gebremst wird. Beispiel: Wenn der Fahrzeuganhänger in der Ebene stillsteht, werden sowohl der am Chassis angebrachte Beschleunigungssensor als auch der die Radbeschleunigung messende Drehbewegungssensor keine Beschleunigung feststellen. In diesem Zustand ist sowohl der erste Messwert als auch der zweite Messwert und damit auch deren Differenz gleich 0. Befindet sich der Fahrzeuganhänger dagegen im Stillstand an einer Steigung oder in einem Gefälle von beispielsweise 10%, gibt der Beschleunigungssensor am Chassis (Steigungssensor) einen ersten Messwert von 10 aus, während der zweite Messwert 0 beträgt. Die Differenz 10 - 0 ergibt den Wert 10, welcher der Steigung entspricht. Durch fortwährende Erfassung (und vorzugsweise durch Bildung eines gleitenden Mittelwerts) der beiden Beschleunigungen kann somit aus der Differenz dieser Beschleunigungen abgeleitet werden, ob der Fahrzeuganhänger auf der Ebene, an einer Steigung oder in einem Gefälle bewegt, beschleunigt oder gebremst wird.

Vorzugsweise reduziert die Steuerung bei einer Verlangsamung des Fahrzeuganhängers und einer in ihrer maximalen Ausziehposition verbleibenden Zugstange, d. h. wenn es nicht zu einem Einschieben der Zugstange kommt, die Antriebsleistung des Motors/Generators, ohne den Motor/Generator in den Rekuperationsbetrieb zu schalten. Eine derartige Ansteuerung des Motors/Generators erfolgt bei einer geringfügigen Verlangsamung bzw. leichten Bremsung des Gespanns, wobei die Antriebsleistung des Motors/Generators durch die Steuerung gegebenenfalls bis auf Null zurückgeregelt wird. Eine rekuperatives Bremsung findet dabei nicht statt.

Vorzugsweise schaltet die Steuerung bei einer Verlangsamung des Fahrzeuganhängers in Kombination mit einer Verschiebung der Zugstange aus ihrer maximalen Ausziehposition den Motor/Generator in den Rekuperationsbetrieb. Eine Verschiebung der Zugstange aus ihrer maximalen Ausziehposition, d. h. ein Einschieben der Zugstange in die Zugstangenführung, findet bei einer mittelstarken oder starken Bremsung des Gespanns statt.

Bei einer (über die Beschleunigungssensoren erkennbaren) mittelstarken Bremsung, bei der die Zugstange zwar ihre maximale Ausziehposition verlässt, die Auflaufbremse jedoch noch nicht anspricht, regelt die Steuerung die Antriebsleistung des Motors/Generators entsprechend der von den Beschleunigungssensoren gemessenen Bremswerte, d. h. negativen Beschleunigungswerte, zurück und schaltet den Motor/Generator in den Rekuperationsbetrieb. Sollte die Rekuperation zu stark werden, wird die Zugstange gegen die Dämpferkräfte wieder bis in ihre maximale Ausziehposition ausgezogen. Damit erkennt das System, dass die Rekuperation zu stark war. Die Rekuperation kann dann entsprechend, gegebenenfalls bis auf Null, zurückgefahren werden.

Bei einer starken Bremsung wird die Zugstange eingeschoben, d. h. die Zugstange verlässt die maximale Ausziehposition, was durch die Positionserfassungseinrichtung entsprechend erkannt wird. Die Steuerung nimmt die Antriebsleistung des Motors/Generators schlagartig zurück und steigert die Rekuperationsleistung entsprechend der von den Beschleunigungssensoren gemessenen Verzögerungen. Sollte die dadurch erzielte Bremswirkung nicht ausreichen, wird die Zugstange durch die Massenträgheit des Fahrzeuganhängers noch weiter eingeschoben und die Auflaufbremse aktiviert.

Im Rekuperationsmodus kann die Rekuperation solange gesteigert werden,

- bis entweder das Leistungsvermögen des Antriebstranges, des Motors/Generators, einer Energiespeichereinrichtung (Batterie, Kondensatoren etc.) oder der Elektronik ausgeschöpft ist, oder
- bis an einem oder mehreren Anhängerrädern zunehmender Radschlupf oder ein blockierendes Anhängerrad festgestellt wird. In diesem Fall wird die Rekuperation kurzzeitig zurückgenommen, so dass auch der Radschlupf wieder Werte annimmt, bei denen ausreichend Seitenführungskräfte übertragen werden können. Nachdem diese Absenkung der Rekuperationsleistung für jeweils nur wenige Millisekunden durchgeführt wird, verhindert die Massenträgheit des Anhängers bzw. die Anwesenheit des Auflaufdämpfers, dass im gleichen Zuge die verringerte Rekuperation (gegebenenfalls auch nur an einem Rad) zu einem härteren Auflaufen des Fahrzeuganhängers bzw. zu einer härteren Zuspannung der Radbremsen führt und damit den gewünschten Effekt eliminieren würde.

Durch sanfte Übergänge in der Steuerung und gegebenenfalls auch eingebaute Hysteresen sowie der Wirkung des Auflaufdämpfers können Längsschwingungen beim Antreiben und Bremsen des Fahrzeuganhängers mittels des erfindungsgemäßen Antriebs-und Bremssystems vermieden werden.

Weiterhin bietet das erfindungsgemäße Antriebs- und Bremssystem eine hohe Ausfallsicherheit, da bei einem Ausfall der elektrischen Antriebs-/Rekuperationssteuerung die Auflaufbremsanlage in üblicher Weise in Aktion treten kann.

Die Erfindung wird nachfolgend anhand der Zeichnungen beispielhaft näher erläutert. Es zeigen:

Figur 1: eine Seitenansicht eines Chassis eines Fahrzeuganhängers mit einem erfindungsgemäßen elektrischen Antriebs- und Bremssystem;

Figur 2: eine Draufsicht auf das Chassis von Figur 1;

Figur 3: einen vertikalen Längsschnitt durch den vorderen Teil der Anhängerdeichsel des Chassis von Figur 1;

Figur 4: die Einzelheit IV von Figur 3 in vergrößertem Maßstab, aus der eine Positionserfassungseinrichtung für die Zugstange gemäß einer ersten Ausführungsform ersichtlich ist; und

Figur 5: einen vertikalen, etwas außermittigen Längsschnitt durch einen Abschnitt einer alternativen Anhängerdeichsel, aus der eine Positionserfassungseinrichtung für die Zugstange gemäß einer zweiten Ausführungsform ersichtlich ist.

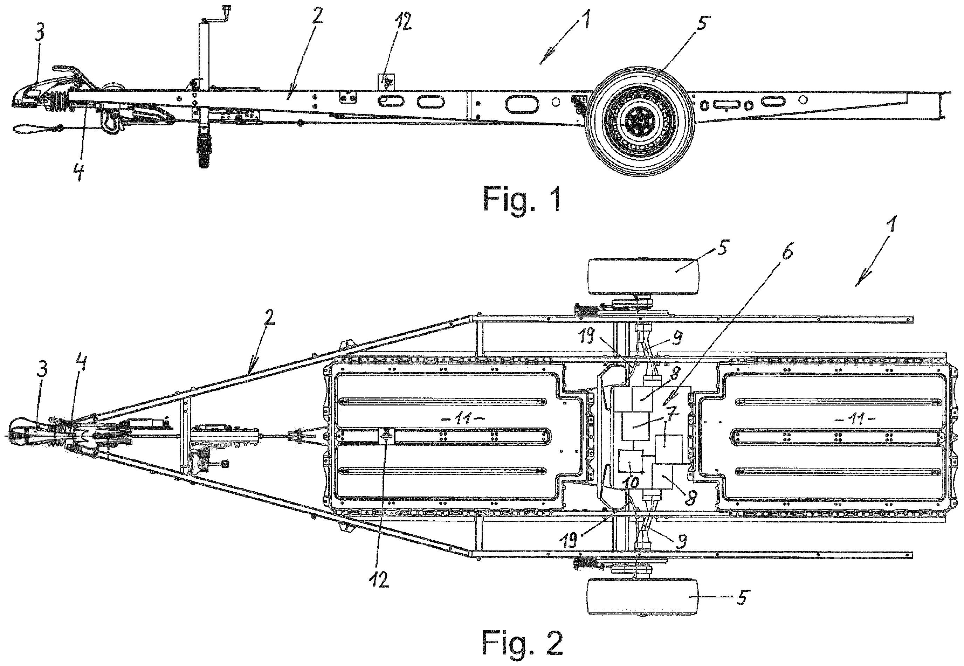

Die Figuren 1 und 2 zeigen eine Seitenansicht bzw. eine Draufsicht auf ein Chassis 1 eines erfindungsgemäßen Fahrzeuganhängers.

Der Fahrzeuganhänger umfasst eine Deichsel 2 mit einer Anhängekupplung 3, die beispielsweise als Kugelkopfkupplung ausgebildet sein kann und zum Ankuppeln des Fahrzeuganhängers an ein nicht dargestelltes Zugfahrzeug dient.

Weiterhin umfasst der Fahrzeuganhänger eine Auflaufbremseinrichtung 4 zur auflaufbedingten Betätigung einer Betriebsbremse des Fahrzeuganhängers. Die Betriebsbremse umfasst Radbremsen, die im Bereich von Anhängerrädern 5 angeordnet sind und beispielsweise als Trommelbremsen ausgebildet sein können.

Der Fahrzeuganhänger umfasst ferner, wie in Figur 2 schematisch dargestellt, eine elektrische Antriebs- und Bremseinrichtung 6 zum elektrischen Antreiben und rekuperativen Bremsen des Fahrzeuganhängers , so dass beim Bremsen eine Energierückgewinnung stattfinden kann.

Die elektrische Antriebs- und Bremseinrichtung 6 umfasst beim dargestellten Ausführungsbeispiel zwei elektrische Motoren/Generatoren 7. Jeder Motor/Generator 7 ist über ein Getriebe 8 und eine Welle 9 mit einem Anhängerrad 5 antriebsmäßig gekoppelt. Die Motoren/Generatoren 7 werden über eine elektronische Steuerung 10 angesteuert, welche die Antriebs- bzw. Rekuperationsleistung der Motoren/Generatoren 7 regelt.

Andere Arten von elektrischen Motoren/Generatoren 7 sind im Rahmen der vorliegenden Erfindung ohne weiteres möglich, beispielsweise solche ohne angeflanschtes Getriebe 8 oder Radnabenmotore.

Wiederaufladbare Energiespeicher 11 in der Form von Batterien bzw. Akkumulatoren versorgen die Motoren/Generatoren 7 mit elektrischer Energie und werden im Rekuperationsbetrieb von den Motoren/Generatoren 7 wieder aufgeladen.

Aus den Figuren 1 und 2 ist ferner ein am Chassis 1 angeordneter Beschleunigungssensor 12 ersichtlich, der zumindest die Längsbeschleunigung des Fahrzeuganhängers, d. h. die Beschleunigung des Gespanns in Fahrtrichtung, misst und entsprechende Beschleunigungssignale an die Steuerung 10 abgibt. Beim Beschleunigungssensor 12 kann es sich um einen ein- oder mehrachsigen Beschleunigungssensor handeln. Bei dem Beschleunigungssensor 12 kann es sich alternativ auch um den Beschleunigungssensor eines elektronischen Anhängerstabilisierungssystems handeln, welches seine Sensordaten mit der Antriebs- und Rekuperationssteuerung teilt.

Der Fahrzeuganhänger weist ferner Drehbewegungssensoren zur Erfassung der Drehbewegungen der Anhängerräder 5, d. h. zur Erfassung von Radimpulsen, und zur Übertragung von Drehbewegungssignalen an die Steuerung 10 auf. Die erfassten Drehbewegungen dienen zur Ableitung von Wegen, Radgeschwindigkeiten und/oder Radbeschleunigungen. Die Drehbewegungssensoren können beispielsweise an den Anhängerrädern 5, an den Motoren/Generatoren 7, an den Ausgängen der Getriebe 8 und/oder im Bereich der Steuerung 10 angeordnet sein.

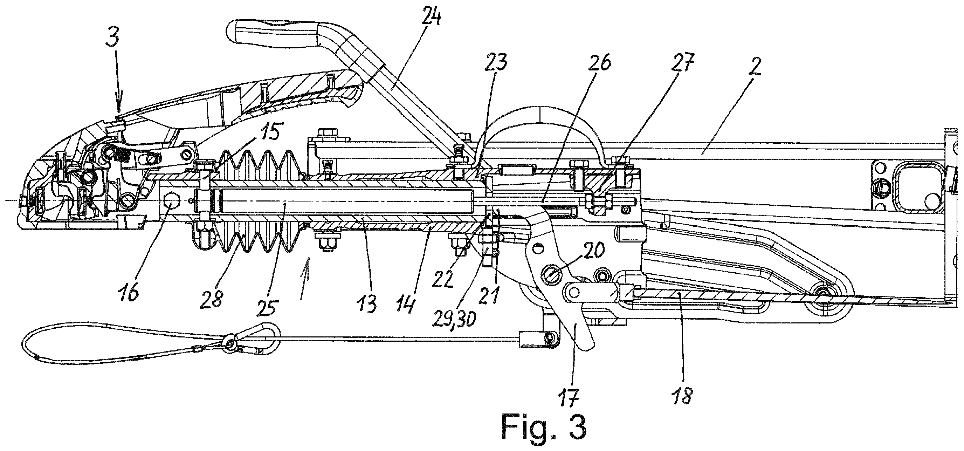

Figur 3 zeigt einen vertikalen Längsschnitt durch die Anhängekupplung 3 und die Auflaufbremseinrichtung 4.

Die Auflaufbremseinrichtung 4 umfasst in bekannter Weise eine Zugstange 13, die mit einem hinteren Zugstangenabschnitt in eine rohrartige Zugstangenführung 14 der Deichsel 2 hineinragt und in dieser längsverschiebbar geführt ist. Ein vorderer Zugstangenabschnitt ist mittels einer vertikalen Schraube 15 und einer horizontalen Schraube 16 fest mit der Anhängekupplung 3 verbunden.

Wird das Zugfahrzeug abgebremst, wird die Zugstange 13 aufgrund der auflaufenden trägen Masse des Fahrzeuganhängers in die Zugstangenführung 14 eingeschoben. Diese Axialbewegung der Zugstange 13 relativ zur Zugstangenführung 14 wird über eine Bremskraftübertragungseinrichtung, die im gezeigten Ausführungsbeispiel mechanisch ausgebildet ist und einen schwenkbaren Übersetzungshebel 17, ein Bremsgestänge oder Bremsseil 18, eine nicht näher dargestellte Ausgleichswaage und Bremsseile 19 (Figur 2) umfasst, zu den Radbremsen übertragen, wodurch diese zugespannt werden können. Anstelle einer mechanischen Bremskraftübertragungseinrichtung kann die Bremskraftübertragungseinrichtung auch hydraulisch ausgebildet sein.

Der Übersetzungshebel 17 ist in bekannter Weise um eine Schwenkachse 13 schwenkbar an der Deichsel 2 gelagert ist und in seinem unteren Bereich mit dem vorderen Ende des Bremsgestänges 18 oder Bremsseils verbunden.

Das obere Ende 21 des Übersetzungshebels 12 wirkt in bekannter Weise mit der Zugstange 13 derart zusammen, dass eine Längsbewegung der Zugstange 13 innerhalb der Zugstangenführung 14 eine Schwenkbewegung des Übersetzungshebels 17 verursacht und dadurch das Bremsgestänge 18 oder Bremsseil betätigt. Hierzu weist die Zugstange 13 ein Anschlagelement 22 in der Form einer Anschlagplatte auf, die am stirnseitigen hinteren Ende der Zugstange 13 angeordnet und fest mit der übrigen Zugstange 13 verbunden ist. Durch Rückstellkräfte der Radbremsen, die auf das Bremsgestänge 18 eine Zugkraft ausüben, wird das obere Ende 21 des Übersetzungshebels 17 immer in Anlage am Anschlagelement 22 und damit an der Zugstange 13 gehalten. Eine Verschiebung der Zugstange 13 bewirkt damit eine Schwenkbewegung des Übersetzungshebels 17.

Weiterhin ist aus Figur 3 ersichtlich, dass das Anschlagelement 22 radial nach außen über den angrenzenden Bereich der Zugstange 13 vorsteht. Das Anschlagelement 22 dient damit auch zur Begrenzung des maximalen Ausziehwegs der Zugstange 13 aus der Zugstangenführung 14, indem der radial nach außen vorstehende Bereich des Anschlagelements 22 an einem Anschlag 23 der Zugstangenführung 14 anschlägt, der durch eine radial nach innen vorspringende Schulter der Zugstangenführung 14 gebildet wird.

Im normalen Fahrbetrieb des Gespanns, d. h. solange es nicht zu einem auflaufbedingten Einschieben der Zugstange 13 kommt, ist die Zugstange 13 immer voll ausgezogen, d. h. das Anschlagelement 22 der Zugstange 13 liegt am Anschlag 23 der Zugstangenführung 14 an.

Ein Handbremshebel 24, der an der Deichsel 2 schwenkbar gelagert ist, kann auf den Übersetzungshebel 17 und damit auf die Bremskraftübertragungseinrichtung derart einwirken, dass eine Feststellbremse betätigt wird.

Aus Figur 3 ist weiterhin noch ein an sich bekannter Auflaufdämpfer 25 ersichtlich, der im dargestellten Ausführungsbeispiel durch einen hydraulischen Stoßdämpfer gebildet wird und sich axial durch die rohrförmige Zugstange 8 hindurch erstreckt. Dieser Auflaufdämpfer 25 ist mit seinem vorderen Ende mittels der Schraube 15 fest mit der Anhängekupplung 3 verbunden, während er mit seinem hinteren Ende, d.h. mit seiner Kolbenstange 26, an einem Abstützelement 27 der Deichsel 2 abgestützt ist. Dieser Auflaufdämpfer 25 dient zur Dämpfung der Axialbewegungen zwischen Zugstange 13 und Deichsel 2.

Der Zwischenraum zwischen der Anhängekupplung 3 und der Zugstangenführung 14 ist mittels eines Faltenbalgs 28 vor Schmutz und Nässe geschützt.

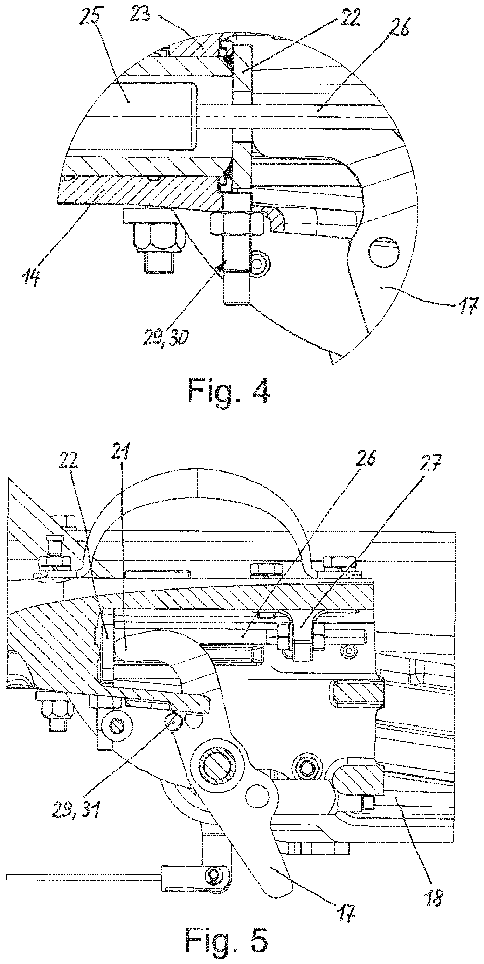

Die elektrische Antriebs- und Bremseinrichtung 6 umfasst eine Positionserfassungseinrichtung 29 zur direkten oder indirekten Erfassung der maximalen Ausziehposition der Zugstange 13. In dem in den Figuren 3 und 4 dargestellten Ausführungsbeispiel umfasst diese Positionserfassungseinrichtung 29 einen Schalter 30, der beispielsweise ein induktiver Näherungsschalter sein kann. Der Schalter 30 ist in Nachbarschaft des Anschlags 23 der Zugstangenführung 14 angeordnet, durchdringt die Wand der Zugstangenführung 14 und ist derart ausgerichtet, dass er einen Schaltvorgang vornimmt, wenn sich die Zugstange 13 aus ihrer maximalen Ausziehposition entfernt, d. h. in die Zugstangenführung 14 eingeschoben wird, bzw. wenn die eingeschobene Zugstange 13 ausgezogen wird und ihre maximale Ausziehposition erreicht.

Im dargestellten Ausführungsbeispiel erkennt der Schalter 30, ob sich das Anschlagelement 22 der Zugstange 13 in Anlage am Anschlag 23 der Zugstangenführung 14 befindet oder nicht. Der Schalter 30 erfasst daher direkt die maximale Ausziehposition der Zugstange 13.

Figur 5 zeigt eine alternative Ausführungsform der Positionserfassungseinrichtung 29. Bei dieser Ausführungsform umfasst die Positionserfassungseinrichtung 29 einen Schalter 31, der die Schwenkposition des Übersetzungshebels 17 erfasst und seinen Schaltzustand ändert, wenn sich der Übersetzungshebel 17 aus seiner maximalen Schwenkposition entfernt bzw. in diese gelangt, die er einnimmt, wenn sich die Zugstange 13 in ihrer maximalen Ausziehposition befindet. Bei dieser Ausführungsform wird somit die maximale Ausziehposition der Zugstange 13 indirekt erfasst.

Weiterhin kann die maximale Ausziehposition der Zugstange 13 auch auf andere Weise detektiert werden, beispielsweise durch eine Positionserfassungseinrichtung, die im Bereich des Bremsgestänges 18 oder der Bremsseile 19 angeordnet ist und deren Position detektiert.

Bei sämtlichen Ausführungsformen wird der vom Schalter 30, 31 signalisierte Schaltzustand an die Steuerung 10 übermittelt, die in Abhängigkeit dieses Schaltzustandes und in Abhängigkeit von den Drehbewegungen der Anhängerräder 5 und der Längsbeschleunigung des Fahrzeuganhängers die Antriebs- bzw. rekuperative Bremsleistung der Motoren/Generatoren 7 regelt.

Diese Regelung wird anhand des folgenden Beispiels erläutert.

a) Anfahren / Beschleunigen

Sobald die Zugstange 13 voll ausgezogen ist, treiben die Motoren/Generatoren 7 die Anhängerräder 5 an, wobei die Regelung der Antriebsleistung mithilfe der an den Anhängerrädern 5 gemessenen Beschleunigung des Fahrzeuganhängers zuzüglich der gemessenen und gemittelten Fahrbahnsteigung und eventuell zuzüglich eines Zuschlags für die Überwindung des Luftwiderstandes bei der betreffenden Geschwindigkeit erfolgt. Die Antriebsleistung der Motoren/Generatoren 7 wird durch die Steuerung 10 solange gesteigert, bis die Zugstange 13 ihre maximale Ausziehposition verlässt, was durch die Positionserfassungseinrichtung 29 erkannt wird.

Aus der gemessenen Längsbeschleunigung, dem von den Motoren/Generatoren 7 aufgebrachten Drehmoment und dem Radius der Anhängerräder 5 kann näherungsweise die Masse des Fahrzeuganhängers ermittelt werden.

Der Auflaufdämpfer 25 verhindert unerwünschte Ruckbewegungen, da die Auszieh- bzw. Einschubkräfte des Auflaufdämpfers 25 überwunden werden müssen.

Wenn die Zugstange 13 ihre maximale Ausziehposition aufgrund der Antriebsleistung der Motoren/Generatoren 7 verlässt, bedeutet dies, dass die Schubkraft am Fahrzeuganhänger ein bestimmtes Maß, das von der Masse des Fahrzeuganhängers und der gemessenen bzw. ermittelten Fahrbahnsteigung abhängt, überschritten haben muss. Die Antriebsleistung kann dann auf einen derartigen Sollwert zurückgefahren werden, dass die Zugstange 13 wieder ihre maximale Ausziehposition einnimmt. Hierdurch wird erreicht, dass der Fahrzeuganhänger ein gezogener Anhänger bleibt.

b) Bremsung

b1) Leichte Bremsung

Bei einer leichten Bremsung erfassen insbesondere die Drehbewegungssensoren eine leichte Verzögerung an den Anhängerrädern 5, während die Positionserfassungseinrichtung 29 ihren Schaltzustand nicht ändert, d. h. die Zugstange 13 nicht eingeschoben wird. Die Steuerung 10 regelt die Antriebsleistung der Motoren/Generatoren 7 zurück, gegebenenfalls bis auf Null.

b2) Mittelstarke Bremsung

Obwohl die Steuerung 10 die Antriebsleistung der Motoren/Generatoren 7 entsprechend der gemessenen Verzögerungswerte zurückregelt, wird die Zugstange 13 etwas eingeschoben, wodurch die Positionserfassungseinrichtung 29 ihren Schaltzustand ändert. Die Steuerung 10 schaltet die Motoren/Generatoren 7 in den Rekuperationsbetrieb. Sollte die Rekuperation zu stark werden, wird die Zugstange 13 gegen die Kräfte des Auflaufdämpfers 25 wieder ausgezogen. Die Rekuperationsleistung wird dann vermindert oder abgeschaltet.

b3) Starke Bremsung

Bei einem auflaufbedingten Einschieben der Zugstange 13 und Umschalten der Positionserfassungseinrichtung 29 wird die Antriebsleistung der Motoren/Generatoren 7 schlagartig auf Null reduziert und die Rekuperationsleistung entsprechend der gemessenen Verzögerungen gesteigert. Sollte die rekuperative Bremsleistung nicht ausreichen, wird die Zugstange 13 durch die Massenträgheit des Fahrzeuganhängers noch weiter eingeschoben und die Auflaufbremse entsprechend aktiviert.

**Patentansprüche**

1. Antriebs- und Bremssystem für einen an ein Zugfahrzeug ankuppelbaren, eine Deichsel (2) mit Anhängekupplung (3) aufweisenden Fahrzeuganhänger, mit:

   - einer Auflaufbremseinrichtung (4) zur Betätigung einer Betriebsbremse des Fahrzeuganhängers, wobei die Auflaufbremseinrichtung (4) eine mit der Anhängekupplung (3) gekoppelte Zugstange (13) und eine an der Deichsel (2) angeordnete Zugstangenführung (14) zur verschiebbaren Führung der Zugstange (13) aufweist,
   - einer elektrischen Antriebs-und Bremseinrichtung (6), die zum Antreiben und rekuperativen Bremsen des Fahrzeuganhängers ausgebildet ist und mindestens einen Motor/Generator (7) und eine Steuerung (10) für den Motor/Generator (7) aufweist,
   - wobei die elektrische Antriebs- und Bremseinrichtung (6) eine Positionserfassungseinrichtung (29) zur direkten oder indirekten Erfassung einer maximalen Ausziehposition der Zugstange (13) relativ zur Zugstangenführung (14) aufweist,

   **dadurch gekennzeichnet, dass** die Positionserfassungseinrichtung (29) als Schalter ausgebildet ist, der einen ersten Schaltzustand einnimmt, wenn sich die Zugstange (13) in ihrer maximalen Ausziehposition befindet, und einen zweiten Schaltzustand einnimmt, wenn sich die Zugstange (13) von ihrer maximalen Ausziehposition entfernt, wobei die Steuerung (10) die Antriebs- und Rekuperationsleistung des Motors/Generators (7) in Abhängigkeit des ersten und zweiten Schaltzustandes und von Drehbewegungs- und Beschleunigungssignalen regelt, die von Sensoren bereitgestellt werden, welche die Drehbewegung von Anhängerrädern (5) und die Längsbeschleunigung des Fahrzeuganhängers erfassen.

2. Antriebs- und Bremssystem nach Anspruch 1, **dadurch gekennzeichnet, dass** die Positionserfassungseinrichtung (29) einen mechanischen Schalter, Reed-Kontakt oder induktiven Näherungsschalter (30, 31) umfasst.

3. Antriebs- und Bremssystem nach Anspruch 1 oder 2, **dadurch gekennzeichnet, dass** die Positionserfassungseinrichtung (29) im Bereich der Zugstangenführung (14) angeordnet ist und die Position der Zugstange (13) erfasst.

4. Antriebs- und Bremssystem nach Anspruch 1 oder 2, **dadurch gekennzeichnet, dass** die Positionserfassungseinrichtung (29) im Schwenkbereich eines mit der Zugstange (13) zusammenwirkenden Übersetzungshebels (17) angeordnet ist und die maximale Ausziehposition der Zugstange (13) über die Position des Übersetzungshebels (17) erfasst.

5. Antriebs- und Bremssystem nach Anspruch 1 oder 2, **dadurch gekennzeichnet, dass** die Positionserfassungseinrichtung (29) im Bereich einer Bremskraftübertragungseinrichtung angeordnet ist und die maximale Ausziehposition der Zugstange (13) über die Position von Elementen der Bremskraftübertragungseinrichtung erfasst.

6. Antriebs- und Bremssystem nach einem der vorhergehenden Ansprüche, **dadurch gekennzeichnet, dass** die Steuerung die Antriebsleistung des Motors/Generators (7) bei einer positiven Beschleunigung des Fahrzeuganhängers solange erhöht, bis sich die Zugstange (13) von der maximalen Ausziehposition entfernt.

7. Antriebs- und Bremssystem nach Anspruch 6, **dadurch gekennzeichnet, dass** die Steuerung (10) bei einer Beschleunigung oder konstanten Geschwindigkeit des Fahrzeuganhängers in Kombination mit einer von der maximalen Ausziehposition entfernten Position der Zugstange (13) die Antriebsleistung des Motors/Generators (7) auf einen vorbestimmten Sollwert reduziert.

8. Antriebs- und Bremssystem nach einem der vorhergehenden Ansprüche, **dadurch gekennzeichnet, dass** die Steuerung (10) ausgebildet ist, eine Fahrbahnsteigung aus der Differenz eines ersten Messwertes und eines zweiten Messwertes zu ermitteln, wobei der erste Messwert von einem am Fahrzeuganhänger angeordneten Beschleunigungssensor (12) geliefert wird, während der zweite Messwert von Drehbewegungen der Anhängerräder (5) erfassenden Drehbewegungssensoren geliefert wird.

9. Antriebs-und Bremssystem nach einem der vorhergehenden Ansprüche, **dadurch gekennzeichnet, dass** die Steuerung (10) bei einer Verlangsamung des Fahrzeuganhängers ohne Verschiebung der Zugstange (13) aus ihrer maximalen Ausziehposition die Antriebsleistung des Motors/Generators (7) reduziert, ohne den Motor/Generator (7) in den Rekuperationsbetrieb zu schalten.

**10.** Antriebs- und Bremssystem nach einem der vorhergehenden Ansprüche, **dadurch gekennzeichnet, dass** die Steuerung (10) bei einer Verlangsamung des Fahrzeuganhängers in Kombination mit einer Verschiebung der Zugstange (13) aus ihrer maximalen Ausziehposition den Motor/Generator (7) in den Rekuperationsbetrieb schaltet.

**11.** Fahrzeuganhänger mit einem Antriebs- und Bremssystem nach einem der vorhergehenden Ansprüche.

**Claims**

**1.** Drive and brake system for a vehicle trailer that can be coupled to a towing vehicle and that has a drawbar (2) having a trailer coupling (3), having:

- an overrun brake system (4) for actuating a service brake of the vehicle trailer, wherein the overrun brake system (4) has a draw rod (13) coupled with the trailer coupling (3) and a draw rod guide (14) arranged on the drawbar (2) for displaceably guiding the draw rod (13),
- an electrical drive and brake device (6) designed to drive and recuperatively brake the vehicle trailer and having at least one motor/generator (7) and a controller (10) for the motor/generator (7),
- wherein the electrical drive and brake device (6) has a position recording device (29) for directly or indirectly recording a maximum extension position of the draw rod (13) relative to the draw rod guide (14),

**characterised in that** the position recording device (29) is designed as a switch that occupies a first switch state if the draw rod (13) is located in its maximum extension position and occupies a second switch state if the draw rod (13) moves away from its maximum extension position, wherein the controller (10) controls the drive and recuperation power of the motor/generator (7) depending on the first and second switch state and on rotation and acceleration signals which are provided by sensors, said sensors recording the rotation of trailer wheels (5) and the longitudinal acceleration of the vehicle trailer.

**2.** Drive and brake system according to claim 1, **characterised in that** the position recording device (29) comprises a mechanical switch, reed contact or inductive proximity switch (30, 31).

**3.** Drive and brake system according to claim 1 or 2, **characterised in that** the positioning device (29) is arranged in the region of the draw rod guide (14) and records the position of the draw rod (13).

**4.** Drive and brake system according to claim 1 or 2, **characterised in that** the position recording device (29) is arranged in the pivot region of a transmission lever (17) working together with the draw rod (13) and records the maximum extension position of the draw rod (13) over the position of the transmission lever (17).

**5.** Drive and brake system according to claim 1 or 2, **characterised in that** the position recording device (29) is arranged in the region of a brake force transmission device and records the maximum extension position of the draw rod (13) by way of the position of elements of the brake force transmission device.

**6.** Drive and brake system according to one of the preceding claims, **characterised in that** the control device increases the drive power of the motor/generator (7) in the event of a positive acceleration of the vehicle trailer until the draw rod (13) moves away from the maximum extension position.

**7.** Drive and brake system according to claim 6, **characterised in that** the control (10) reduces the drive power of the motor/generator (7) to a pre-determined target value in the event of an acceleration or constant speed of the vehicle trailer in combination with a position of the draw rod (13) moved away from the maximum extension position.

**8.** Drive and brake system according to one of the preceding claims, **characterised in that** the controller (10) is designed to determine a road incline from a difference between a first measured value and a second measured value, wherein the first measured value is delivered by an acceleration sensor (12) arranged on the vehicle trailer, while the second measured value is delivered by rotation sensors recording rotations of the trailer wheels (5).

**9.** Drive and brake system according to one of the preceding claims, **characterised in that** the controller (10) reduces the drive power of the motor/generator (7) in the event of the vehicle trailer slowing without a displacement of the draw rod (13) from its maximum extension position, without switching the motor/generator (7) into the recuperation operation.

**10.** Drive and brake system according to one of the preceding claims, **characterised in that** the controller (10) switches the motor/generator (7) into the recuperation operation in the event of the vehicle trailer slowing in combination with a displacement of the draw rod (13) from its maximum extension position.

**11.** Vehicle trailer having a drive and brake system according to one of the preceding claims.

## Revendications

1. Système d'entraînement et de freinage pour une remorque de véhicule pouvant être couplée à un véhicule de traction, présentant un timon (2) avec un attelage de remorque (3), pourvu :

   - d'un dispositif de freinage à inertie (4) pour l'actionnement d'un frein de service de la remorque de véhicule, dans lequel le dispositif de freinage à inertie (4) présente une barre de traction (13) couplée avec l'attelage de remorque (3) et un guide de barre de traction (14) disposé sur le timon (2) pour un guidage coulissant de la barre de traction (13),
   - d'un dispositif d'entrainement et de freinage (6) électrique qui est conçu pour l'entraînement et le freinage par récupération de la remorque de véhicule et présente au moins un moteur/générateur (7) et une commande (10) pour le moteur/générateur (7),
   - dans lequel le dispositif d'entraînement et de freinage (6) électrique présente un dispositif de détection de position (29) pour la détection directe ou indirecte d'une position d'extension maximale de la barre de traction (13) par rapport au guide de barre de traction (14),

   **caractérisé en ce que** le dispositif de détection de position (29) est conçu sous forme de commutateur qui adopte un premier état de réglage lorsque la barre de traction (13) se trouve dans sa position d'extension maximale, et adopte un deuxième état de réglage lorsque la barre de traction (13) s'éloigne de sa position d'extension maximale, où la commande (10) règle la puissance d'entraînement et de récupération du moteur/générateur (7) en fonction des premier et deuxième états de réglage et de signaux de déplacements en rotation et d'accélération qui sont fournis par des capteurs, lesquels détectent le déplacement en rotation des roues de remorque (5) et l'accélération longitudinale de la remorque de véhicule.

2. Système d'entraînement et de freinage selon la revendication 1, **caractérisé en ce que** le dispositif de détection de position (29) comprend un commutateur mécanique, un commutateur de contact Reed ou un commutateur de proximité inductif (30, 31).

3. Système d'entraînement et de freinage selon la revendication 1 ou la revendication 2, **caractérisé en ce que** le dispositif de détection de position (29) est disposé dans la zone du guide de barre de traction (14) et détecte la position de la barre de traction (13).

4. Système d'entraînement et de freinage selon la revendication 1 ou la revendication 2, **caractérisé en**

ce que le dispositif de détection de position (29) est disposé dans la zone de pivotement d'un levier de translation (17) agissant conjointement avec la barre de traction (13) et détecte la position d'extension maximale de la barre de traction (13) par la position du levier de translation (17).

5. Système d'entraînement et de freinage selon la revendication 1 ou la revendication 2, **caractérisé en ce que** le dispositif de détection de position (29) est disposé dans la zone d'un dispositif de transmission de la force de freinage et détecte la position d'extension maximale de la barre de traction (13) par la position d'éléments du dispositif de transmission de la force de freinage.

6. Système d'entraînement et de freinage selon l'une des revendications précédentes, **caractérisé en ce que** la commande augmente la puissance d'entraînement du moteur/générateur (7) pour une accélération positive de la remorque de véhicule aussi longtemps jusqu'à ce que la barre de traction (13) s'éloigne de la position d'extension maximale.

7. Système d'entraînement et de freinage selon la revendication 6, **caractérisé en ce que** la commande (10), pour une accélération ou une vitesse constante de la remorque de véhicule, en combinaison avec une position de la barre de traction (13) éloignée de la position d'extension maximale, réduit la puissance d'entraînement du moteur/générateur (7) à une valeur souhaitée prédéterminée.

8. Système d'entraînement et de freinage selon l'une des revendications précédentes, **caractérisé en ce que** la commande (10) est conçue pour déterminer une montée de la voie à partir de la différence d'une première valeur de mesure et d'une deuxième valeur de mesure, où la première valeur de mesure est donnée par un capteur d'accélération (12) disposé sur la remorque de véhicule tandis que la deuxième valeur de mesure est donnée par des détecteurs de mouvements en rotation des déplacements en rotation des roues de remorque (5).

9. Système d'entraînement et de freinage selon l'une des revendications précédentes, **caractérisé en ce que** la commande (10), pour un ralentissement de la remorque de véhicule sans déplacement de la barre de traction (13) hors de sa position d'extension maximale, réduit la puissance d'entraînement du moteur/générateur (7) sans commuter le moteur/générateur (7) vers le fonctionnement en récupération.

10. Système d'entraînement et de freinage selon l'une des revendications précédentes, **caractérisé en ce que** la commande (10), pour un ralentissement de la remorque de véhicule en combinaison avec un déplacement de la barre de traction (13) hors de sa position d'extension maximale, commute le moteur/générateur (7) vers le fonctionnement en récupération.

11. Remorque de véhicule pourvue d'un système d'entraînement et de freinage selon l'une des revendications précédentes.

Fig. 1

Fig. 2

EP 4 112 337 B1

Fig. 3

EP 4 112 337 B1

Fig. 4

Fig. 5

**IN DER BESCHREIBUNG AUFGEFÜHRTE DOKUMENTE**

**In der Beschreibung aufgeführte Patentdokumente**

- US 20200377094 A1
- US 20170144497 A1
- US 20120261900 A1